# EUROPEAN PATENT APPLICATION

(11) **EP 4 803 883 A1**
(43) Date of publication of application: **09.09.2026**
(21) Application number: 25187420.2
(22) Date of filing: 03.07.2025
(51) Int. Cl.: G01N 21/3586, G01N 21/95

(54) **WAFER OPTICAL QUALITY CONTROL**

(30) Priority: 04.03.2025 EP 25161569
(71) Applicant: Stichting Radboud Universiteit, 6525 XZ Nijmegen (NL)
(72) Inventor: ELESS, Viktoria, 6525 XZ Nijmegen (NL)
(74) Representative: Patent Business B.V.

(57) **Abstract**

The present invention is in the field of nanotechnology for information processing, in particular for storage of data, such as for quantum computing. It relates to a physical system for manipulating qubits, e.g. status control, in particular for quality control, as well as to a method of quality control.

## Description

### FIELD OF THE INVENTION

The present invention is in the field of nanotechnology for information processing, in particular for storage of data, such as for quantum computing. It relates to a physical system for manipulating qubits, e.g. status control, in particular for quality control, as well as to a method of quality control.

### BACKGROUND OF THE INVENTION

Quantum computing technology is maturing rapidly with an eye to scaling as fast as possible to deliver on the promise of unlocking currently unsolvable problems. There are now numerous large start-ups in the field which have products for sale, to each other - building the supply chain -, and to research institutes with knowledgeable staff who wish to buy operational systems and jump start their own quantum efforts.

For quantum computing or quantum bit is a basic unit of quantum information-the quantum version of the classic binary bit physically realized with a two-state device. Examples of such a two-state device are a transistor, a memory bit, etc. Likewise, a qubit is a two-state quantum-mechanical system. Examples are the spin of an electron (spin up; spin down) and a polarization of a single photon (left-handed and the right-handed circular polarization). Contrary to a classical (two-state) system, in quantum mechanics the qubit can be considered to relate to a superposition of multiple states simultaneously, a property that is fundamental to quantum mechanics and quantum computing. Whereas a measurement of a classical bit would not disturb its state, a measurement of a qubit would destroy its coherence and irrevocably disturb the superposition state.

Despite this big push, qubits are still manufactured on small diameter wafers in non-commercial cleanrooms. This makes sense in so far as much development work remains to be done, but it also poses a fundamental bottleneck to scaling the technology.

Many qubits are fabricated on materials other than silicon - such as lithium niobate and silicon nitride. In addition, nowadays qubits operate differently to current semiconductor chips. First of all, they require a cryogenic environment, and, secondly, there are properties beyond voltage characteristics that define how well they work, for which there are no production line measures, nor proxies to estimate them. This means that although the existing Quality Assurance (QA) processes of the semiconductor industry are very advanced, they do not fully meet the needs of the nascent quantum computing industry.

In practice this means that the wafer has to be diced, wired bonded, and cooled down before its operational status or quality can be ascertained. This creates a logistical bottleneck for both device development and production. In the case of production, it also means that for larger QPUs they have to be sold without QA testing taking place beforehand. Advanced electrical characterisation systems being currently available also are not suited to wafer scale testing, as they require the dicing and wire bonding already mentioned.

The prior art electrical characterisation mentioned may reach mK operating temperatures, but it cannot feasibly load or process a whole wafer of devices, let alone more than 1 wafer. It therefore does not allow for the missing need a nanofabrication QA to be carried out. The prior art scanning probe microscopy at low temperatures may also reaches mK operating temperatures, but has the same issue regarding sample loading capacity, as the electrical characterisation does. It has superior topographical resolution, but additionally at lower speeds. It is therefore does provide nanofabrication QA, but in a system that does not allow scaling.

The present invention therefore relates to an improved system for quality assurance of e.g. qubits, and a method of measuring a status of a sample, which overcomes one or more of the above disadvantages, without jeopardizing functionality and advantages.

### SUMMARY OF THE INVENTION

It is an objective of the invention to provide an improved sample optical quality control system (100), comprising an optical pulse generator, such as a femtosecond laser (1), for providing a beam of optical pulses to a beam splitter (2), wherein an optical pulse has a pulse length of 10⁻¹⁵ sec-10⁻⁵ sec, in particular 8*10⁻¹⁵ sec-4*10⁻⁸ sec, more in particular 5*10⁻¹⁵ sec-1*10⁻¹¹ sec, even more in particular 2* 10⁻¹⁵ sec-3 * 10⁻¹² sec, such as 1*10⁻¹⁵ sec-1*10⁻¹³ sec, and wherein the wavelength of a photon of the optical pulse is from 1-100 µm, in particular from 3-25 µm, more in particular in a range of 10-20 µm, the beam splitter configured to split the beam into a pump beam having a first optical beam path and a probe beam having a second optical beam path, wherein the first optical beam path is configured to provide an optical delay in view of the second optical beam path, wherein the pump beam is provided to a sample, wherein the sample is configured to provide a signal response to a optical adder (8), and wherein the probe beam is provided to the optical adder (8), and wherein the optical adder (8) is configured to provide a combined beam to a THz detector (6), in particular wherein the pump beam is provided to a THz emitter, and wherein the THz emitter is configured to provide a signal to the sample, typically at least one THz detector. The present quality control system can operate at cryogenic temperatures, such as 4K, and accept one wafer ore even multiple wafers (3 or 4 depending on their diameter) at a time. Although this cryogenic temperature is approximately 100x higher than the operation temperature of the qubits, it is also 100x lower than room temperature. The temperature corresponds to a readily accessible temperature at which some of the necessary quantum behaviours emerge and is therefore both suitable for benchmarking and attainable. The system can use an adaptation of Time Domain Spectroscopy used in the THz regime (THz-TDS); therein a quantum cascade laser (QCL) can be used to opto-mechanically scan the surface of the wafers. This latter technique uses an excitation beam followed by a probe beam to detect changes in the electric field of the light. As such it is very sensitive, and can be deployed to detected key features of e.g. the freshly manufactured qubit, for example, through extracting the refractive index of the material. The QCL wavelength typically is in a regime usually referred to as FIR, specifically 19.19 µm; in an example it aligns with the atomic absorption line of bismuth atoms implanted in silicon (Si:Bi). This material has been shown to have sensitivity greater by around two orders of magnitude than the currently existing broadband detectors. The detector device can be further optimised in nanofabrication with the end result expected to resemble a FET structure, albeit one gated by light rather than voltage. The exemplary FIR THz based optical scanning of qubit wafers provides quality control with impurity donor doped silicon detector operating at 4K. The term "control" is used here in the context of checking, testing, or verifying by an experiment.

The present system is designed specifically, such as to give information on both the etched channels and the metal deposition on a wafer scale, and for the effect of quantum phenomena (or their benchmarked proxies) to be observable. As noted, current semiconductor quality control systems for all their speed, resolution and other advanced features, do not provide information based on sensitive parameters such as refractive index. The present system may be further developed, such as to include mechanical probes and cantilevers; these are however not considered necessary for its operation. As such, greater sample areas can be covered, with higher speed than e.g. a low temperature scanning probe microscope - which is the current competing technology. The present sensitive detector, the application of an adapted THz-TDS technique, the 4K temperature, the wafer scale scanning at speed are all key features and together deliver a new system and results. Other chemical elements (such as group V elements, nowadays referred to as Group 15 elements) can be successful used as impurity atoms for the detector, as well as other metals: lithium, magnesium, aluminium, and even selenium and sulphur. This changes the wavelength of the detector transition and each has different fabrication challenges. They can also be combined to present more than one transition line in a detector. The present highly sensitive detector, however with a limited, typically single, response wavelength is considered to have limited utility otherwise. The present increased sensitivity provides an enhancement. Applying a probe technique to scanning for large area coverage and at low temperature is also an advantage, in particular for scaling qubit technology.

The present system can be both scaled and standardised. It provides benchmark measurements that allow large areas to be evaluated, and best devices to be selected for further testing, sale or usage. Due to the multi-wafer capacity it also brings advantages to production, and due to the information, it provides prior to time consuming testing, which may be used in a technology development process.

In a second aspect the present invention relates to a method of measuring a status of a sample comprising providing the optical quality control system (100) according to the invention, and measuring the status of the sample or part thereof.

Thereby the present invention provides a solution to one or more of the above mentioned problems.

Advantages of the present description are detailed throughout the description. References to the figures are not limiting, and are only intended to guide the person skilled in the art through details of the present invention.

### DETAILED DESCRIPTION OF THE INVENTION

In an exemplary embodiment of the present quality control system the first optical beam path and the second optical beam path each individually comprise at least one optical flat mirror (11) for directing light over the respective optical beam path. Typically a number of mirrors can be provided, such as 2-4 mirrors, optionally in combination with further mirrors, such as adjustable mirrors. Therewith the optical beam paths, each individually, can be modified or adjusted, such that light travels over an intended path.

In an exemplary embodiment of the present quality control system the first optical beam path comprises at least one position adjustable optical flat mirror (13) configured for adjusting a length of the first optical beam path, in particular wherein the at least one optical flat mirror (13) is selected from an optical mirror, a spherical mirror, a retroreflector, a substrate comprising a mirror surface, and combinations thereof. Typically, a number of mirrors can be provided, such as 2-4 mirrors, optionally in combination with further mirrors, such as the above mirrors. Therewith the optical beam paths, each individually, can be modified or adjusted, such that light travels over an intended path.

In an exemplary embodiment of the present quality control system the sample optical quality control system (100) comprises a cryogenic sub-unit (30) for receiving the sample, in particular for maintaining a temperature of the said sample at a temperature below 120 K, more in particular below 10 K, such as below 5 K, e.g. 4.2 K, more in particular wherein the cryogenic sub-unit comprises a cryogenic cooler. In view of the sample quality, typically relating to quantum characteristics, a low temperature may be preferred, such as below 5 K. Thereto, at least parts of the present quality control system can be provided in the cryogenic sub-unit. Other parts, such as the THz detector, may still be outside the cryogenic sub-unit.

In an exemplary embodiment of the present quality control system the cryogenic sub-unit further comprises the beam path adder (8) and/or the THz detector (6). The beam path adder, such as a semi-transparent mirror, an aperture, or the like, provides a combination of light of the first optical beam path and the second optical beam path, and directs the combined light to the THz detector.

In an exemplary embodiment of the present quality control system the cryogenic sub-unit further comprises a first optical window (31) configured for directing the pump beam to the sample and/or a second optical window (32) configured for directing the optical signal response to the optical adder (8). Depending on the location of the various components of the present system, and the sample, optical windows may be provided. In an example optical windows may be selected from suitable optical windows in terms of transmittance thereof in the typically wavelength of 3-25 µm used, such as KRS5 (thallium Bromo iodide) windows.

In an exemplary embodiment the present quality control system comprises at least one port (35) for introducing and removing the said sample (9).

In an exemplary embodiment of the present quality control system the THz detector comprises a photo detector for providing a detection signal, and optionally a detection signal amplifier, such as a pre-amplifier. The present photo detector typically has a band gap in the order of 0.05-0.5 eV, which is suited for detecting the present wavelength.

In an exemplary embodiment of the present quality control system the THz detector is a broadband detector configured to detect light in a wavelength range of 1-100 µm, in particular from 3-25 µm, more in particular in a range of 10-20 µm.

In an exemplary embodiment of the present quality control system the THz detector is configured to detect a perturbation of an electromagnetic field caused by the said sample.

In an exemplary embodiment of the present quality control system the THz photo detector comprises one of a light gated Field Emission Transistor (FET), a photo diode, a narrow band gap semiconductor with a band gap substantially in the range of the wavelength range of 3-25 µm, such as a Hg₁₋ₓCdₓTe (MCT) detector, in particular with 0.2<x<0.5, more in particular with 0.25<x<0.3, and a doped Si detector, wherein dopants are selected from Group 15 elements, such as N, P, As, Sb and Bi, and from Li, Mg, Al, Se, S, in particular wherein a dopant concentration is from 1*10¹⁴-0.5*10¹⁷ dopants/cm³, in particular 5*10¹⁴-1*10¹⁶ dopants/cm³, such as 1*10¹⁵-8*10¹⁵ dopants/cm³. It is found that these photo detectors are in particular suited for the present application. They also provide a good reproducibility, accuracy, etc.

In an exemplary embodiment of the present quality control system the system (100) is configured to measure transmitted light through the said sample, and/or at least one refractive index of the said sample, and/or at least one absorption index of the said sample. Optical properties of the said sample can be measured with the present control system.

In an exemplary embodiment of the present quality control system the THz emitter is configured to provide 1-75 pulses per measurement, in particular 10-50 pulses.

In an exemplary embodiment of the present quality control system the optical pulse generator comprises a quantum cascade laser (QCL), or a free electron laser, or the femtosecond laser and the THz emitter, or an electronically synchronization combination thereof. The inventors consider three options, or a combination thereof.

In an exemplary embodiment of the present quality control system the optical pulse generator provides a linear polarization of >95%.

In an exemplary embodiment of the present quality control system the optical pulse generator provides a bandwidth of wavelengths of <5%, in particular < 1% (full width at half maximum).

In an exemplary embodiment of the present quality control system the femtosecond laser provides optical pulses with a pulse length of 0.5-5 fs (10⁻¹⁵ sec), such as 1-2 fs.

In an exemplary embodiment of the present quality control system the quantum cascade laser (QCL) provides optical pulses with a pulse repetition rate of 1-100 MHz, such as 5-25 MHz.

In an exemplary embodiment of the present quality control system a free electron laser provides optical pulses with a pulse repetition rate of 1-100 MHz, such as 5-25 MHz.

In an exemplary embodiment of the present quality control system the optical pulse generator comprises a quantum cascade laser (QCL). For reference to a QCL one may consider https://nl.wikipedia.org/wiki/Kwantumcascadelaser. The present QCL provides a narrow band of photons, typically with a distribution well within 3-5 cm⁻¹.

In an exemplary embodiment of the present quality control system the femtosecond laser provides optical pulses with a pulse length of 0.5-5 fs (10⁻¹⁵ sec), such as 1-2 fs.

In an exemplary embodiment of the present quality control system the first optical beam path is 0.005-500 µm longer than the second optical beam path.

In an exemplary embodiment of the present quality control system the detection and/or emission is configured to be in a time domain.

In an exemplary embodiment of the present quality control system the optical adder is selected from a second beam splitter, and from an optical mirror comprising an aperture configure to pass the signal response through the aperture. The optical adder is typically a beamsplitter, of the same kind used to split the light at the beginning of the path used to recombine the light. It functions as an 'optical adder'.

In an exemplary embodiment of the present quality control system the pump beam is configured to optomechanically scan an area of the said sample of 100-100 µm² to 500-500 µm² per pulse, in particular wherein optomechanical movement over the area is provided by a mechanical driver, such as a stepper motor, and a piezoelectrical element.

In an exemplary embodiment of the present quality control system the pump beam is configured to scan a status of at least part of the said sample, such as the status of a Qubit, or that of a Qudit. In quantum computing, a qudit is a unit of quantum information that's described by a superposition of states, where the number of states is an integer greater than two. Qudits are a multi-level computational unit that's an alternative to the conventional 2-level qubit. They take more than 2 possible states and are used in quantum computing.

In an exemplary embodiment the present quality control system further comprises a data processor, in particular wherein the data processor is configured to process data from the THz detector, in particular wherein processing is selected from a Fourier Transform, a fast Fourier transform, an Inverse Fourier Transform, a filter, such as noise filter, a bias filter, a band pass filter, a wavelength filter, and a frequency filter.

In an exemplary embodiment the present quality control system further comprises a prober, in particular an electromagnetic prober, wherein the prober is configured to provide a magnetic field to the area of the sample, such as a magnetic coil, or a set of metal pins designed to make contact with the device's contact pads and pass current..

In an exemplary embodiment of the present method the status is selected from the optical quality of the said sample, a defect on or in the said sample, an impurity in the said sample, an inhomogeneity in the said sample, such as in terms of thickness, or variation in chemistry, and the status of a Qubit in the said sample, a change of state of a Qubit, a distribution of states of Qubits, etc. Where "Qubit" is mentioned, also "Qudit" is referred to. Also substantially 2-dimenional materials can be measured, such as graphene, photonic materials, exotic materials, such as topological insulators.

The invention is further detailed by the accompanying figures and examples, which are exemplary and explanatory of nature and are not limiting the scope of the invention. To the person skilled in the art it may be clear that many variants, being obvious or not, may be conceivable falling within the scope of protection, defined by the present claims.

### SUMMARY OF THE DRAWINGS

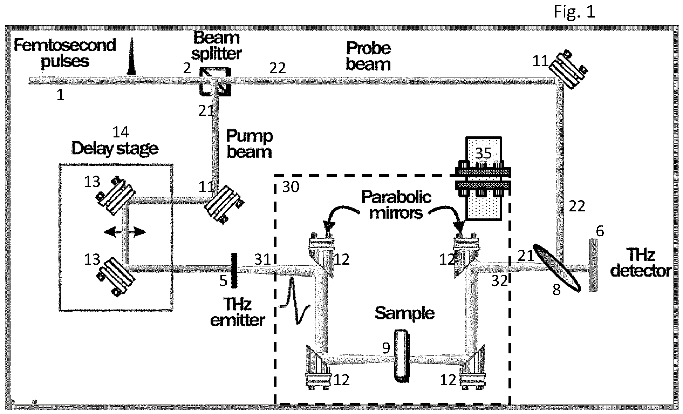

Figs. 1-3 show details of the present invention.

### DESCRIPTION OF THE DRAWINGS

- 100: quality control system
- 1: femtosecond laser
- 2: beam splitter
- 3: Pump beam path
- 4: Probe beam path
- 5: THz emitter
- 6: THz detector
- 7: adjustable optical beam path
- 8: first and second optical beam path adder
- 9: sample
- 11: optical flat mirror
- 12: optical parabolic mirror
- 13: adjustable optical flat mirror
- 14: optical delay
- 21: first optical beam path
- 22: second optical beam path
- 30: temperature controlled cryogenic sub-unit
- 31: first optical window
- 32: second optical window
- 35: port for sample introduction in sub-unit

In figure 1 an exemplary system is shown. The whole system, or part thereof, may be provided in a temperature controlled cryogenic sub-unit 30. Said sub-unit may be large enough to uptake 1 or more wafers, or a single sample. A femtosecond laser 1 provides optical pulses to the system. A beam splitter 2 splits said pulses in two optical paths, a first path 21 directs pulses to the to be measured sample, a second path, as a reference pulse, to the THZ detector 6. Various mirrors 11, 12, 13 may be used to direct the optical pulses, as well as to adjust the length of the first optical path in particular. Thereto in particular mirrors 13 are provided, which are adjustable, such that the length of the first optical path can be adjusted accordingly. A THz emitter is used to provide pulses to the sample. The sample 9 is the measured, e.g. in terms of optical properties, in particular transmittance, reflectance, and absorbance. The pulses of the first and second optical paths is then combined through an optical beam path adder 8, and provided to a THz detector, for further processing. If the cryogenic sub-unit is used typically optical windows 31,32 may be used. Further, a port may be provided to the sub-unit, in order to enter a sample, and in order to maintain cryogenic conditions.

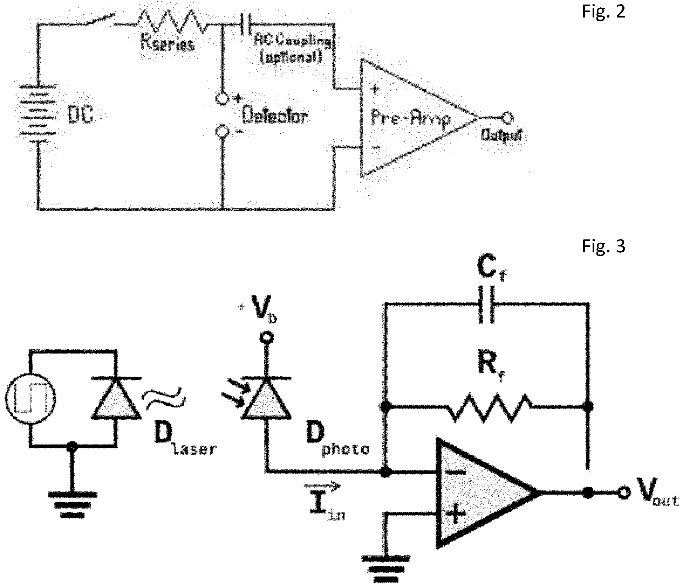

In fig. 2 a typical operating circuit of the present THz detector is shown. A photodetector, typically the present narrow band gap semiconductor, providing infrared photon detection, e.g. in the 3-25 µm, with a bandwidth of < 3-4 sec⁻¹. The detected signal is typically provided as input to a pre-amplifier, typically being incorporated in the detector. The pre-amplified signal is then used for further signal processing.

In fig. 3 an alternative layout of the THz detector is shown. The light is detected by a photodiode, providing a current to be amplified by the amplifier shown. The amplified voltage signal is as in fig. 2 further signal processed.

### EXPERIMENTAL

In a generic experiment the set-up of fig. 1 was used. The femtosecond laser of FELIX provided pulses of 2 femtosecond length with a power of 0.1 W per pulse. In the pump beam path to pulses were provided to the THz emitter, in the experiment being a quantum cascade laser of type XYZ of company BYZ. The pulses were provided to the sample, a silicon wafer provided with qubits. A transmittance measurement was performed. The transmitted light was passed on to the present THz detector, largely as depicted in fig 2, and combined with the probe beam. In a scanning mode, with a optical pump beam width of 50 µm, a line by line scan, a device by device scan, or a sample location by sample location scan could be performed. It was found that scanning speed was typically not a limiting factor; scanning speeds of 0.001-0.1 m²/sec are achievable. Due to typical averaging the provided signals the speeds may be reduced by a factor of 10-100.

Typical physical parameters that are measured are transmittance, reflectance, absorbance, electro-magnetic field strength, and the like. The parameters distinguish faulty devices or faulty parts from functioning parts, and typically also provide a detailed quantification of these parameters with sufficient accuracy, typically well within 10% relative, such as within 1% relative.

The present THz detector is typically cooled to about -196 °C (77 K) and is provided outside the sub-unit 30. The sub-unit, comprising the sample to be measured, is typically cooled to about 4 K, which is found sufficient to provide stable and reproducible measurements.

The signals detected by the THz detector are used for further processing. Typically, possibly after further amplification, a Fast Fourier Transform is used to process the signals. The outcome of the FFT can then be used to calculate the physical parameters above.

It is considered that a mechanical displacement generates an optical path difference; this difference, at each given position, results in that one wavelength is cancelled out due to destructive interference. As a consequence, light absorption for each wavelength in the present wavelength range can be determined in one go. Using a Fourier Transform such a displacement (cm) is converted to a wavelength (cm⁻¹). The conversion from there to frequency, and then onto subsequent parameters such refractive index is then made. The Fast Fourier Transform (FFT) is an algorithm that reduces this mathematical problem to a simpler on that produces the result quickly and without loss of accuracy. The ability to get information from all wavelengths (multiplexing) increases the signal-to-noise-ratio (SNR) as does the high throughput which is determined by the collimated bean diameter. The multiplexing also allows for a shorter scan time, while having an internal reference laser in the system provides much more accurate scaling than relying on mechanical positioners would.

## Claims

1. A sample optical quality control system (100), comprising
An optical pulse generator, such as a femtosecond laser (1), for providing a beam of optical pulses to a beam splitter (2), wherein an optical pulse has a pulse length of 10⁻¹⁵ sec-10⁻⁵ sec, and wherein the wavelength of a photon of the optical pulse is from 1-100 µm, in particular from 3-25 µm, more in particular in a range of 10-20 µm, the beam splitter configured to split the beam into a pump beam having a first optical beam path and a probe beam having a second optical beam path, wherein the first optical beam path is configured to provide an optical delay in view of the second optical beam path, wherein the pump beam is provided to a sample, wherein the sample is configured to provide a signal response to a optical adder (8), and wherein the probe beam is provided to the optical adder (8), and wherein the optical adder (8) is configured to provide a combined beam to a THz detector (6), in particular wherein the pump beam is provided to a THz emitter, and wherein the THz emitter is configured to provide a signal to the sample.

2. The wafer optical quality control system according to claim 1, wherein the first optical beam path and the second optical beam path each individually comprise at least one optical flat mirror (11) for directing light over the respective optical beam path.

3. The wafer optical quality control system according to any of claims 1-2, wherein the first optical beam path comprises at least one position adjustable optical flat mirror (13) configured for adjusting a length of the first optical beam path, in particular wherein the at least one optical flat mirror (13) is selected from an optical mirror, a spherical mirror, a retroreflector, a substrate comprising a mirror surface, and combinations thereof.

4. The wafer optical quality control system according to claim 3, wherein the sample optical quality control system (100) comprises a cryogenic sub-unit (30) for receiving the sample, in particular for maintaining a temperature of the said sample at a temperature below 120 K, more in particular below 10 K, such as below 5 K, more in particular wherein the cryogenic sub-unit comprises a cryogenic cooler, in particular
wherein the cryogenic sub-unit further comprises the beam path adder (8) and/or the THz detector (6).

5. The wafer optical quality control system according to any of claims 3-4, wherein the cryogenic sub-unit further comprises a first optical window (31) configured for directing the pump beam to the sample and a second optical window (32) configured for directing the optical signal response to the optical adder (8), and/or
comprising at least one port (35) for introducing and removing the said sample (9).

6. The wafer optical quality control system according to any of claims 1-5, wherein the THz detector comprises a photo detector for providing a detection signal, and optionally a detection signal amplifier, such as a pre-amplifier, and/or
Wherein the THz detector is a broadband detector configured to detect light in a wavelength range of 1-100 µm, in particular from 3-25 µm, more in particular in a range of 10-20 µm, and/or Wherein the THz detector is configured to detect a perturbation of an electromagnetic field caused by the said sample, and/or
Wherein the THz photo detector comprises one of a light gated Field Emission Transistor (FET), a photo diode, a narrow band gap semiconductor with a band gap substantially in the range of the wavelength range of 3-25 µm, such as a Hg₁₋ₓCdₓTe (MCT) detector, in particular with 0.2<x<0.5, more in particular with 0.25<x<0.3, and a doped Si detector, wherein dopants are selected from Group 15 elements, such as N, P, As, Sb and Bi, and from Li, Mg, Al, Se, S, in particular wherein a dopant concentration is from 1*10¹⁴-0.5*10¹⁷ dopants/cm³, in particular 5*10¹⁴-1*10¹⁶ dopants/cm³, such as 1*10¹⁵-8*10¹⁵ dopants/cm³.

7. The wafer optical quality control system according to any of claims 1-6, wherein the system (100) is configured to measure transmitted light through the said sample, and/or at least one refractive index of the said sample, and/or at least one absorption index of the said sample.

8. The wafer optical quality control system according to any of claims 1-7, wherein the THz emitter is configured to provide 1-75 pulses per measurement, in particular 10-50 pulses, and/or Wherein the optical pulse generator comprises a quantum cascade laser (QCL), or a free electron laser, or the femtosecond laser and the THz emitter, or an electronically synchronization combination thereof, and/or
Wherein the optical pulse generator provides a linear polarization of >95%, and/or
Wherein the optical pulse generator provides a bandwidth of wavelengths of <5%, in particular < 1% (full width at half maximum).

9. The wafer optical quality control system according to any of claims 1-8, wherein the femtosecond laser provides optical pulses with a pulse length of 0.5-5 fs (10⁻¹⁵ sec), such as 1-2 fs, or wherein the quantum cascade laser (QCL) provides optical pulses with a pulse repetition rate of 1-100 MHz, such as 5-25 MHz, or a free electron laser provides optical pulses with a pulse repetition rate of 1-100 MHz, such as 5-25 MHz, and/or
Wherein the first optical beam path is 0.005-500 µm longer than the second optical beam path, and/or
The detection and/or emission is configured to be in a time domain, and/or Wherein the optical adder is selected from a second beam splitter, and from an optical mirror comprising an aperture configure to pass the signal response through the aperture.

10. The wafer optical quality control system according to any of claims 1-9, wherein the pump beam is configured to optomechanically scan an area of the said sample of 100-100 µm² to 500-500 µm² per pulse, in particular wherein optomechanical movement over the area is provided by a mechanical driver, such as a stepper motor, and a piezoelectrical element.

11. The wafer optical quality control system according to any of claims 1-10, wherein the pump beam is configured to scan a status of at least part of the said sample, such a status of a Qubit, or of a Qudit.

12. The wafer optical quality control system according to any of claims 1-11, further comprising a data processor, in particular wherein the data processor is configured to process data from the THz detector, in particular wherein processing is selected from a Fourier Transform, a fast Fourier transform, an Inverse Fourier Transform, a filter, such as noise filter, a bias filter, a band pass filter, a wavelength filter, and a frequency filter.

13. The wafer optical quality control system according to any of claims 1-12, further comprising a prober, in particular an electromagnetic prober, wherein the prober is configured to provide a magnetic field to the area of the sample, such as a magnetic coil.

14. A method of measuring a status of a sample comprising
Providing the optical quality control system (100) according to any of claims 1-13, and Measuring the status of the said sample or part thereof.

15. The method according to claim 14, wherein the status is selected from the optical quality of the said sample, a defect on or in the said sample, an impurity in the said sample, an inhomogeneity in the said sample, such as in terms of thickness, or variation in chemistry, and the status of a Qubit in the said sample.
